# EUROPEAN PATENT APPLICATION

(11) **EP 4 804 297 A1**
(43) Date of publication of application: **09.09.2026**
(21) Application number: 26162071.0
(22) Date of filing: 03.03.2026
(51) Int. Cl.: H01M 14/00, H01M 4/13, H01M 4/48, H01M 4/66, H01M 10/0525

(54) **A PHOTOELECTRODE FOR A PHOTOBATTERY**

(30) Priority: 04.03.2025 GB 202503090
(71) Applicant: South Bank University Enterprises Ltd., London SE1 0AA (GB)
(72) Inventor: Sajjad, Muhammad Tariq, London, SE1 0AA (GB); Khatoon, Rabia, London, SE1 0AA (GB); Dunn, Steven, London, SE1 0AA (GB)
(74) Representative: Appleyard Lees IP LLP

(57) **Abstract**

There is described a photoelectrode and a rechargeable lithium-ion photobattery comprising the photoelectrode. The photoelectrode comprises a transition metal oxide component and a discrete conductive carbon component. The transition metal oxide component comprises a single transition metal oxide material having an average pore size of at least 5 nm. The discrete conductive carbon component has a thickness of 50 µm or less. There is also disclosed a method of preparing the photoelectrode and the use of said photoelectrode in a photobattery system.

## Description

### FIELD

The present invention relates to a photoelectrode, a method of preparing a photoelectrode and the use of said photoelectrode in a photobattery system. The present invention also relates to a photobattery comprising the photoelectrode. The photoelectrode may be particularly useful in lithium-ion batteries and/or lithium-metal batteries.

### BACKGROUND

Lithium-ion batteries (LIBs) comprise a negative electrode (anode), a positive electrode (cathode), a separator and an electrolyte. The electrodes store lithium ions. The electrolyte transfers positively charged lithium ions from the anode to the cathode and vice versa through the separator. The separator allows the internal transfer of ions between the electrodes, but prevents the internal transfer of electrons to prevent short-circuiting.

During charging, lithium ions are transferred from the positive electrode to the negative electrode which generates a flow of electrons through a circuit from the negative electrode to the positive electrode.

During discharging, the lithium ions return from the negative electrode to the positive electrode creating a flow of electrons back through the circuit from the positive electrode to the negative electrode producing an electric current, powering a connected device, for example.

The capacity of a metal ion battery is limited by the fundamental parameters of the materials used. Various strategies have been employed to maximise energy storage, including manufacturing control and investigating the impact of each component in a battery system.

Recent developments have focused on integrating photoactive materials into battery systems. However, challenges remain in material selection and processing techniques for high-performance electrodes.

One approach to enhance energy storage and recovery of LIBs involves integrating a photovoltaic battery system using a three-electrode based device together with a shared electrode. However, these systems are limited by an increased cost in manufacturing and complexity, and also face user-related issues due to their bulky and heavy nature. These devices also have limits to their operation because energy is lost due to multi-step energy conversion operations. This results in a low photoenergy conversion efficiency limiting their practical applications.

An alternative has emerged in the form of a photo-rechargeable battery (or photobattery). These systems use a bi-functional electrode material capable of harvesting photons and providing electron storage. However, it remains a challenge to create a system that could fully exploit the effects of solar light and exhibit acceptable energy conversion and storage characteristics.

The photo-rechargeable lithium-ion battery (P-LIB) is the most studied due to its high working voltage, energy density, reversibility, cycle stability, and established commercial success. However, despite the potential to enhance battery performance, the practical implementation of P-LIB devices relies on the development of novel photo-electrodes with acceptable light absorption and electrochemical properties. The library of materials capable of performing both light harvesting and Li-ion storage is limited.

Improved photo-rechargeable batteries are therefore desired.

The present invention aims, amongst others, to provide a photoelectrode that addresses at least one disadvantage of the prior art, whether identified here or elsewhere.

The present invention aims to address the above mentioned issues by providing a photoelectrode that offers simultaneous light harvesting and energy storage, demonstrating an improved current and specific capacity with a high PC-SE in combination with a large operating window.

### SUMMARY

According to a first aspect of the present invention, there is provided a photoelectrode for a rechargeable lithium-ion battery, comprising:
a. a transition metal oxide component; and
b. a discrete conductive carbon component,
wherein the transition metal oxide component comprises a single transition metal oxide material, the transition metal oxide material having an average pore size of at least 5 nm, and wherein the discrete conductive carbon component has a thickness of 50 µm or less.

The transition metal oxide component may comprise at least 65 wt% of a single transition metal oxide material relative to the total weight of the transition metal oxide component, such as at least 70 wt%, such as at least 75 wt%. The transition metal oxide component may comprise 95 wt% or less of a single transition metal oxide material relative to the total weight of the transition metal oxide component, such as 90 wt% or less, such as 85 wt% or less.

The single transition metal oxide material may comprise a single transition metal oxide. As used herein, the term 'single transition metal oxide' means a singular transition metal oxide type. For example, the single transition metal oxide material may comprise a first transition metal oxide type and other non-transition metal or non-metal oxide components, but not a second transition metal oxide type.

The single transition metal oxide material may comprise any suitable transition metal oxide. The transition metal oxide material may comprise tungsten oxide (WO3), titanium dioxide (TiO2), zinc oxide (ZnO), tin oxide (SnO2), iron oxide (Fe2O3), copper oxide (CuO) or cobalt oxide (Co3O4). Preferably, the single transition metal oxide material comprises tungsten oxide (WO3). The source of tungsten oxide may be any suitable material comprising tungsten, such as H2WO4.

The single transition metal oxide material may comprise a hole scavenger. The hole scavenger may be selected from one or more of isopropanol, methanol, ascorbic acid, sodium sulphite, sodium sulphate, sodium borohydrate, ammonium formate and/or mercaptopropanoic acid (MPA). Preferably, the hole scavenger is isopropanol.

The single transition metal oxide material may comprise a hole scavenger in an amount of at least 6 wt% relative to the total weight of the transition metal oxide material, such as at least 8 wt%, such as at least 10 wt%. The single transition metal oxide material may comprise a hole scavenger in an amount of 20 wt% or less relative to the total weight of the transition metal oxide material, such as 15 wt% or less , such as 13 wt% or less.

The single transition metal oxide material may have an average pore size of at least 5 nm, such as at least 10 nm, such as at least 15 nm, such as at least 20 nm.

The single transition metal oxide material may have a surface area of at least 4 m²g⁻¹, such as at least 6 m²g⁻¹, such as at least 8m²g⁻¹, such as at least 10 m²g⁻¹, such as at least 12 m²g⁻¹, such as at least 14 m²g⁻¹, such as at least 16 m²g⁻¹.

Advantageously, without wishing to be bound by theory, the inventors have found that the high average pore size and high surface area provided by the single transition metal oxide material produces a photoelectrode having high energy storage, increased capacity and ease of lithium-ion diffusion.

The transition metal oxide component may comprise at least 2.5 wt% of a carbon source, such as at least 5 wt%, such as at least 7.5 wt%. The transition metal oxide component may comprise up to 20 wt% of a carbon source, such as up to 15 wt%, such as up to 12.5 wt%. The carbon source may be selected from one or more of carbon black, such as Super-P^{®} Preferably, the carbon source is Super-P^{®}.

The transition metal oxide component may comprise at least 2.5 wt% of a polymer, such as at least 5 wt% relative to the total weight of the transition metal oxide component, such as at least 7.5 wt%. The transition metal oxide component may comprise 20 wt% or less of a polymer relative to the total weight of the transition metal oxide component, such as 15 wt% or less, such as 12.5 wt% or less. The polymer may be a fluoropolymer, such as polyvinylidene fluoride (PVDF) and/or polytetrafluoroethylene(PTFE). Preferably, the polymer is PVDF.

The transition metal oxide component may have a first surface and a second surface substantially opposing the first surface.

The transition metal oxide component may be described herein with reference to the 3D cartesian coordinate system along x, y and z axes, wherein the x-axis extends along the width of the transition metal oxide component and the y-axis extends along the length of the transition metal oxide component. The transition metal oxide component may comprise a thickness along the z-axis.

The transition metal oxide component may have a thickness of at least 30 µm, such as at least 40 µm, such as at least 50 µm, such as at least 60 µm.

As used herein the term 'discrete conductive carbon component' defines a distinct carbon component that is electrically conductive.

The discrete conductive carbon component may comprise graphitic carbon and/or carbon black, such as Super-P^{®}. Preferably, the discrete conductive carbon component comprises graphitic carbon.

The discrete conductive carbon component may have a first surface and a second surface substantially opposing the first surface. The discrete conductive carbon component may be in the form of a sheet. The discrete conductive carbon component may be described herein with reference to the 3D cartesian coordinate system along x, y and z axes, wherein the x-axis extends along the width of the discrete conductive carbon component and the y-axis extends along the length of the discrete conductive carbon component. The discrete conductive carbon component may comprise a thickness along the z-axis.

The discrete conductive carbon component has a thickness of 50 µm or less, such as 30 µm or less, such as 20 µm or less, such as 10 µm or less, such as 5 µm or less. The discrete conductive carbon component may have a thickness of 1 µm or less, such as 0.5 µm or less, such as 0.2 µm or less, such as 0.1 µm or less.

The photoelectrode comprises a transition metal oxide component and a discrete conductive component. The photoelectrode may comprise further components or may consist of a transition metal oxide component and a discrete conductive component. The photoelectrode may comprise a first layer comprising the transition metal oxide component and a second layer comprising the discrete conductive carbon component. The transition metal oxide component may be arranged over at least a part of the discrete conductive carbon component to form the photoelectrode. The first surface of the transition metal oxide component may be arranged over at least a part of the second surface of the discrete conductive carbon component to form the photoelectrode.

The transition metal oxide component may be arranged in direct contact with at least a part of the discrete conductive carbon component to form the photoelectrode. The first surface of the transition metal oxide component may be arranged in direct contact with at least a part of the second surface of the discrete conductive carbon component to form the photoelectrode.

The transition metal oxide component and the discrete conductive carbon component may have substantially the same shape. The photoelectrode may be formed as a single unit comprising the transition metal oxide component and the discrete conductive carbon component.

The transition metal oxide component and the discrete conductive component are arranged such that, in use in a battery, the transition metal oxide component may be in contact with the electrolyte and the discrete conductive component may be electrically connected to the circuitry of the battery.

The photoelectrode may have an average pore size of at least 5 nm, such as at least 10 nm, such as at least 15 nm, such as at least 20 nm.

The photoelectrode may have a surface area of at least 4 m²g⁻¹, such as at least 6 m²g⁻¹, such as at least 8 m²g⁻¹, such as at least 10 m²g⁻¹.

The photoelectrode may be a photoanode.

The photoelectrode may be a bi-functional electrode material capable of harvesting photons and providing electron storage. The photoelectrode may be operable to store lithium ions.

Advantageously, the simple design of the photoelectrode enables the formation of a compact bi-functional electrode material. The electrode of the present invention is simple to fabricate, and has a simple and compact structure.

The transition metal oxide component and the discrete conductive carbon component have different energy band structures (i.e., the energy difference between the valence band and the conduction band).

A 'heterojunction' can form at the interface between two different materials, usually semiconductors, with different energy band structures. Heterojunctions have distinct energy levels that allow for efficient charge separation and redox reactions. The behaviour of a heterojunction is dependent on the band alignment at the interface.

The photoelectrode may be operable to form a carbon quasi-heterojunction between the transition metal oxide component and the discrete conductive carbon component.

As used herein, the term 'carbon quasi-heterojunction' is used to define the interface formed between the transition metal oxide component and the discrete conductive carbon component.

Advantageously, the formation of a quasi-heterojunction between the discrete conductive carbon component and the transition metal oxide component enhances electron transfer, which improves the conductivity and capacitance of the battery. This interaction may be increased when the thickness of the discrete conductive carbon component is reduced.

The combination of a photoanode with a highly porous and large surface area provided by the single transition metal oxide material and the incorporation of a discrete conductive carbon component provides an enhanced charge transfer leading to a higher capacity, improved photo efficiency and long-term cyclability all while operating at a large voltage window.

According to a second aspect of the present invention, there is provided a method of preparing a photoelectrode for a rechargeable lithium-ion battery, comprising:
a. preparing a single transition metal oxide material comprising a transition metal oxide and a hole scavenger;
b. preparing a transition metal oxide component slurry comprising the single transition metal oxide material;
c. coating the slurry onto at least a part of a discrete conductive carbon component; and
d. drying the slurry.

The coating step may be selected from casting, transfer coating, dip coating, blade coating, gravure coating, spray coating and/or printing.

Advantageously, the method to prepare the photoelectrode is safe and employs low-cost materials to prepare a photoelectrode capable of excellent photo-battery performance.

Advantageously the photoelectrode of the present invention may be operable to enhance the capacity of a metal-ion battery system over the theoretical capacity. The photoelectrode may be operable to significantly increase the energy storage density of a variety of metal-ion batteries. In addition, where metal ion diffusion is slow, such as in multi-valent systems, the present invention may be operable to improve the diffusion rates, making such systems competitive.

The discrete carbon component may be arranged over at least part of a support surface, such that the method may further comprise the step of:
e. removing the dried slurry and the discrete carbon component from the support surface.

The support surface may be any suitable surface to provide structural support to the discrete carbon component during fabrication. The support surface may comprise a metal foil (such as copper foil and/or aluminium foil), carbon felt, a plastic sheet and/or a glass sheet. Preferably, the support surface comprises a metal foil, such as copper foil.

The photoelectrode may be a free-standing component. The term 'free standing' as used herein defines a photoelectrode comprising the transition metal oxide component and the discrete conductive carbon component in the absence of a support surface.

The single transition metal oxide material may comprise any suitable transition metal oxide. The transition metal oxide material may comprise tungsten oxide (WO3), titanium dioxide (TiO2), zinc oxide (ZnO), tin oxide (SnO2), iron oxide (Fe2O3), copper oxide (CuO) or cobalt oxide (Co3O4). Preferably, the single transition metal oxide material comprises tungsten oxide (WO3). The source of tungsten oxide may be any suitable material comprising tungsten, such as H2WO4.

The single transition metal oxide material may comprise a hole scavenger. The hole scavenger may be selected from one or more of isopropanol, methanol, ascorbic acid, sodium sulphite, sodium sulphate, sodium borohydrate, ammonium formate and/or mercaptopropanoic acid (MPA). Preferably, the hole scavenger is isopropanol.

The transition metal oxide component slurry may comprise a single transition metal oxide material, a carbon source and/or a polymer.

The transition metal oxide component slurry may comprise at least 65 wt% of a single transition metal oxide material, such as at least 70 wt%, such as at least 75 wt%. The transition metal oxide component slurry may comprise 95 wt% or less of a single transition metal oxide material, such as 90 wt% or less, such as 85 wt% or less.

The transition metal oxide component slurry may comprise at least 2.5 wt% of a carbon source, such as at least 5 wt%, such as at least 7.5 wt%. The transition metal oxide component slurry may comprise up to 20 wt% of a carbon source, such as 15 wt% or less, such as 12.5 wt% or less. The carbon source may be selected from carbon black, such as Super-P^{®}. Preferably, the carbon source is Super-P^{®}.

The transition metal oxide component slurry may comprise at least 2.5 wt% of a polymer, such as at least 5 wt%, such as at least 7.5 wt%. The transition metal oxide component slurry may comprise 20 wt% or less of a polymer, such as 15 wt% or less, such as 12.5 wt% or less. The polymer may be a fluoropolymer, such as polyvinylidene fluoride (PVDF) and/or polytetrafluoroethylene(PTFE). Preferably, the polymer is PVDF.

According to a third aspect of the present invention, there is provided the use of a photoelectrode according to the first aspect of the present invention in a metal-ion photobattery, suitably a lithium-ion photobattery.

According to a fourth aspect of the present invention, there is provided a kit of parts comprising:
a. a first photoelectrode according to the first aspect of the present invention;
b. a second electrode;
c. an electrolyte; and
d. a separator.

The kit of parts may further comprise a photocell comprising a glass window for light exposure. The first photoelectrode, second electrode, electrolyte, and separator may be arranged within the photocell.

According to a fifth aspect of the present invention, there is provided a metal-ion photobattery, suitably a lithium-ion photobattery, comprising the photoelectrode according to the first aspect of the present invention.

Typically, metal-ion batteries comprise a negative electrode (anode), a positive electrode (cathode), a separator and an electrolyte. The electrodes store metal ions, such as lithium ions. The electrolyte transfers positively charged lithium ions from the anode to the cathode and vice versa through the separator. The separator prevents the internal transfer of electrons.

The photobattery may comprise a first photoelectrode according to the first aspect of the present invention, a second electrode, an electrolyte; and a separator. The photobattery may further comprise a photocell.

The separator may be arranged within the photocell. The photocell may comprise the electrolyte. The photobattery may comprise a first portion and a second portion, delimited by the separator. The first portion may comprise the first photoelectrode. The first photoelectrode may be in contact with the electrolyte. The second portion may comprise the second electrode. The second electrode may be in contact with the electrolyte The separator may delimit the first and second portions such that it is arranged between the first and second electrodes.

The first and second electrodes may be in ionic communication through the separator via the electrolyte. The first and second electrodes may be in electric communication via an external circuit. The transition metal oxide material may be in direct contact with the electrolyte. The discrete conductive carbon portion of the first photoelectrode may be in in electronic communication with the second electrode via an external circuit.

The photocell may comprise a window, such as a glass window, operable to allow external light to interact with the first photoanode. The first photoanode may be operable to harvest photons from an external light source in combination with providing electron storage.

The second electrode may be operable to store metal ions, such as lithium ions.

The second electrode may be a cathode. The second electrode may comprise any suitable cathode material known in the art, for example a lithium metal foil, lithium cobalt oxide (LiCoO2), lithium manganese oxide (LiMn2O4), lithium iron phosphate (LiFePO4), and/or lithium nickel manganese cobalt oxide (LiNiMnCoO2). Preferably, the second electrode may comprise lithium metal foil.

The cathode material may be coated on a metal foil, such as an aluminum foil.

The electrolyte may be operable to carry metal ions, such as lithium ions, from the anode to the cathode and vice versa through the separator.

The electrolyte may comprise any suitable electrolyte known in the art. The electrolyte may comprise a lithium salt, such as lithium hexafluorophosphate (LiPF₆), lithium tetrafluoroborate (LiBF4) and/or lithium perchlorate (LiClO4). Preferably, the electrolyte may comprise lithium hexafluorophosphate (LiPF₆).

The separator may be operable to enable the internal passage of metal ions, such as lithium ions, from the anode to the cathode and vice versa. The separator may be operable to prevent the internal transfer of electrons from the anode to the cathode and vice versa.

The separator may comprise a membrane that is ion-permeable. The separator may be any suitable separator known in the art. The separator may be selected from a polymeric membrane, such as a polyethylene (PE) or polypropylene (PP) membrane, for example a Celgard^{®} 2500 propylene membrane; a glass fiber separator; nonwoven separator; microporous membrane; and/or a composite membrane.

Under illumination at 0.1C, the photobattery may have a capacity of at least 900 mAhg⁻¹, such as at least 950 mAhg⁻¹, 1,000 mAhg⁻¹, such as at least 1,050 mAhg⁻¹, such as at least 1,100 mAhg⁻¹, such as at least 1150 mAhg⁻¹.

Under light charging at 1C, the photobattery may have a capacity of at least 550 mAhg⁻¹, such as at least 600 mAhg⁻¹, such as at least 650 mAhg⁻¹, such as at least 700 mAhg⁻¹, such as at least 750 mAhg⁻¹, such as at least 800 mAhg⁻¹.

In the absence of light (i.e. in dark conditions), charging at 1C, the photobattery may have a capacity after 400 cycles of at least 350 mAhg⁻¹, such as at least 360 mAhg⁻¹, such as at least 370 mAhg⁻¹, such as at least 380 mAhg⁻¹, such as at least 390 mAhg⁻¹, such as 400 mAhg⁻¹.

In the absence of light (i.e. in dark conditions), charging at 1C, the photobattery may have a coulombic efficiency after 400 cycles of at least 65%, such as at least 70%, such as at least 75%, such as at least 80%.

Under illumination, charging at 1C, the photobattery may have a capacity after 400 cycles of at least 580 mAhg⁻¹, such as at least 590 mAhg⁻¹, such as at least 600 mAhg⁻¹, such as at least 610 mAhg⁻¹, such as at least 620 mAhg⁻¹.

Under illumination, charging at 1C, the photobattery may have a coulombic efficiency after 400 cycles of at least 75%, such as at least 80%, such as at least 85%, such as at least 90%.

The photobattery may have a photoconversion and storage efficiency of at least 2%, such as at least 3%, such as at least 4%. The photobattery may have a photo efficiency of at least 4.5%, such as at least 5%. The photobattery may have a photo efficiency of at least 5.2%, such as at least 5.4%, such as at least 5.6%, such as at least 5.8%.

The photobattery may have an operating window voltage gap of at least 2 V, such as at least 2.2 V, such as at least 2.4 V, such as at least 2.6V, such as at least 2.8 V.

Surface area as disclosed herein is determined by BET measurement.

Average pore size as disclosed herein is determined by BET measurement.

'In dark' conditions as used herein defines conditions in which the photobattery is not exposed to light. To create these conditions, the window of the photo-cell is covered with black-tape such that no light can enter the cell. In dark conditions, the battery functions without any photo-induced effects, such that the charging and discharging operations are dependent on electrochemical reactions only.

'Under light' conditions as used herein defines conditions in which the photobattery is exposed to light. Unless stated otherwise, a solar simulator Oriel-LCS-100TM Sol1A light source (at AM 1.5) was employed for the tests carried out herein under light conditions.

As used herein, unless otherwise expressly specified, all numbers such as those expressing values, ranges, amounts or percentages may be read as if prefaced by the word "about", even if the term does not expressly appear. The term "about" when used herein means +/- 10% of the stated value.

Also, any numerical range recited herein is intended to include all sub-ranges subsumed therein. Singular encompasses plural and vice versa.

As used herein, the term "polymer" refers to oligomers and both homopolymers and copolymers, and the prefix "poly" refers to two or more.

'Including', 'for example' and like terms means including for example but not limited to.

The terms "comprising" and "comprises" as used herein are synonymous with "including" or "containing" and are inclusive or open-ended and do not exclude additional, non-recited members, elements or method steps. Additionally, although the present disclosure has been described in terms of "comprising", the processes, materials, and coating compositions detailed herein may also be described as "consisting essentially of" or "consisting of".

When used herein, "average" refers to mean average, unless otherwise provided for.

Where ranges are provided in relation to a genus, each range may also apply additionally and independently to any one or more of the listed species of that genus.

All the features contained herein may be combined with any of the above aspects in any combination.

For a better understanding of the disclosure, and to show how aspects of the same may be carried into effect, reference will now be made, by way of example, to the following experimental data and figures.

### BRIEF DESCRIPTION OF DRAWINGS

Figures 1a-d show the single tungsten oxide material powder characterisations. Figure 1a shows the SEM micrograph. Figure 1b shows the XDR pattern. Figure 1c shows the UV-Vis absorption spectrum. Figure 1d shows the Raman spectrum.
Figures 2a-d show the performance of the free-standing photoelectrodes in a half cell in dark and under light . Figure 2a shows the cyclovoltammetry (CV) curves in dark and under light at 9 mV s⁻¹. Figure 2b shows the galvanostatic charge-discharge (GCD) curves at 0.1 C and 1C, showing 5 charge/discharge cycles in dark and under light. Figure 2c shows the GCD curves at 1C, showing 1, 5, 100, 200, 400 cycles of charge discharge in dark conditions. Figure 2d shows the GCD curves at 1C, showing 1, 5, 100, 200 and 400 cycles of charge discharge under light conditions.
Figures 3a and 3b show performance tests of the free-standing photoelectrodes in dark and under light . Figure 3a shows rate performance tests of batteries in dark and under light at different C-rates. Figure 3b shows cyclic stability test up to 400 cycles at 1C in dark and under light.
Figures 3c and 3d show a comparison of the specific capacity between the free-standing photoelectrodes of the present invention and known photo-assisted electrodes. Figure 3c shows the comparison with different bandgaps. Figure 3d shows the comparison with different operating voltage ranges.
Figures 4a and 4b show a representation of the photo-discharging mechanism of the photobattery according to the present invention comprising a free-standing photoelectrode according to the present invention.
Figure 5a shows the photoluminescence (PL) decays of the transition metal oxide component arranged on a glass, a copper foil electrode, and a discrete conductive carbon component (free standing).
Figure 5b shows Nyquist plots of the photoelectrodes of the present invention in dark and under light irradiation after 5 GCD cycles.
Figure 5c shows a battery recovery test under light.

### DESCRIPTION OF EMBODIMENTS

### EXAMPLES

### Example 1

### Synthesis of the single transition metal oxide material (WO3)

0.5 g of H2WO4 (Sigma-Aldrich 99% tungstic acid) was mixed with 20.0 mL of deionized (DI) water in a 25 mL Teflon-lined hydrothermal autoclave. The solution was stirred for 20 minutes at room temperature, before 1.0 mL of an IPA and deionised (DI) water mixture (3:10) was added, followed by a further 10 minutes of stirring. The solution was then transferred to the autoclave and heated at 170 °C for 12 hours. After cooling to room temperature, the sample was washed with an excess of DI water and ethanol via centrifugation and then dried at 100 °C for 4 hours.

### Measurement methods

The surface morphology and particle size of the WO3 powder were examined using a Zeiss Supra 55 VP scanning electron microscope (SEM).

X-ray powder diffraction (XRD) analysis was performed with a Bruker D8 Advance, using Cu K-α radiation (1.54 Å) at 40 kV and 40 mA, to assess the phase structure, purity, and crystallinity of the material.

Diffuse reflectance spectrum (DRS) was recorded between 200-800 nm using a UV-2600i spectrophotometer, with BaSO₄ as the reference, to determine the bandgap.

### Material characterisation

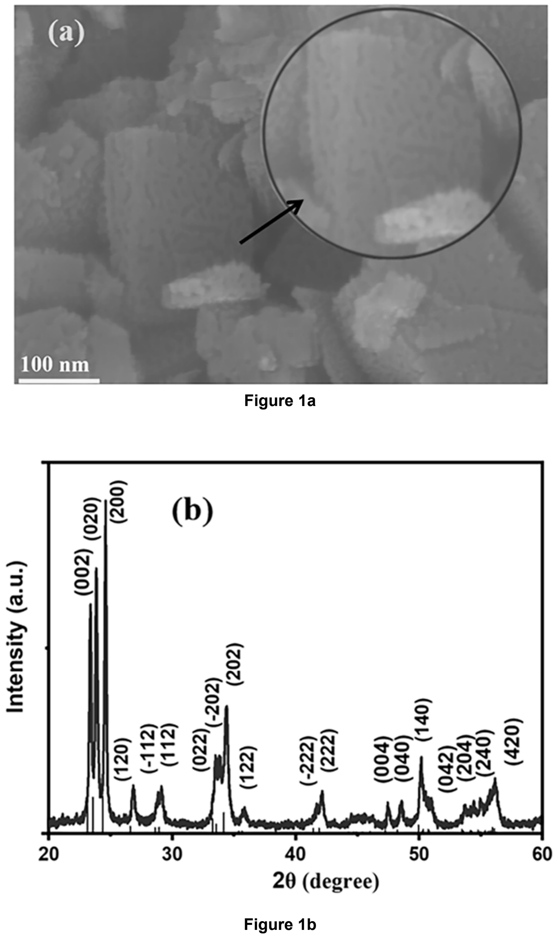

Figure 1a shows the SEM micrograph of the WO3 porous layered nanoplates. The SEM data shows that the single tungsten oxide material is present in the form of porous nanoplates around 100 nm in size. The single tungsten oxide material obtained was observed to have a surface area of 10 m² g⁻¹ with an average pore size of 15 nm, indicating a highly porous system.

Figure 1b shows the XRD pattern of the single tungsten oxide material. The diffraction features of the prepared single tungsten oxide material were indexed against monoclinic WO₃ (JCPDS file no. 71-2141), with the calculated lattice parameters of a = 7.2979 Å, b = 7.539 Å, and c = 7.688 Å. All XRD peaks of the prepared single tungsten oxide material aligned well with monoclinic WO₃, with no additional peaks from impurities, confirming the high purity of the single tungsten oxide material. Furthermore, the prominent and strong XRD peaks reflect the high crystallinity of the material.

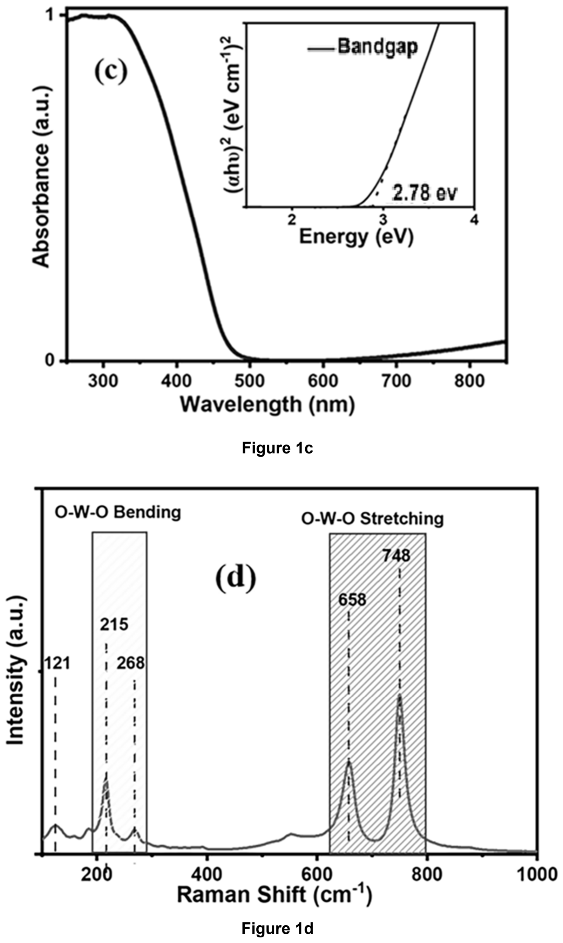

Figure 1c shows the UV-Vis absorption spectrum and Tauc plot (inset) confirming the single tungsten oxide material as an efficient solar light absorber with an optical band gap of 2.78 eV. The single tungsten oxide material demonstrated broad light absorption from ultraviolet to visible wavelengths (280 nm to 500 nm). The estimated energy bandgap was ~2.78 eV, confirming the suitability of the single tungsten oxide material as a photo-active electrode material for photo-batteries and other photoelectrochemical energy systems.

Figure 1d shows the Raman spectrum obtained for the single tungsten oxide material which confirms the formation of high purity crystalline monoclinic WO3. No additional vibration peaks were observed.

### Example 2

### Preparation of the photoelectrode

A slurry was prepared by mixing 80 wt% WO3 (single transition metal oxide material prepared in Example 1), 10 wt% Super-P, and 10 wt% polyvinylidene fluoride (PVDF) in N-methyl-2-pyrrolidone (NMP) (Sigma Aldrich, UK). The slurry was cast onto a carbon-coated copper foil (copper foil supported discrete conductive carbon component) and dried overnight in a vacuum at 70 °C. The coated foil was then cut into 16 mm diameter disks, and the copper foil removed from the combined discrete conductive carbon and transition metal oxide component to produce free-standing WO3 photoelectrodes.

### Preparation of the photobattery

The free-standing WO3 electrode served as the anode. Lithium metal foil served as the counter electrode (cathode). The separator (Celgard^{®} 2500) polypropylene membrane was saturated with 50.0 µL of electrolyte 1.0 M lithium bis(trifluoromethane) sulfonamide (LiPF6) in a 1:1 mixture of 1,3-dioxolane (DOL) and 1,2-dimethoxyethane (DME).

The photobattery was assembled with the anode, electrolyte-saturated separator, and cathode in a photocell with a glass window for light exposure. All cells were assembled in an argon-filled glovebox with oxygen and water levels below 1 ppm.

### Measurement methods

A Biologic SP-300 galvanostat was used to perform electrochemical measurements on all batteries.

An Oriel-LCS-100TM Sol1A light source (at AM 1.5) was employed for electrochemical impedance spectroscopy (EIS), cyclic voltammetry (CV), and galvanostatic charge-discharge (GCD) measurements at different scan rates and currents.

### Material characterisation

Electrochemical analysis of the free-standing WO3 anodes was conducted using a two-electrode photocell.

### Electrochemical performance in the dark

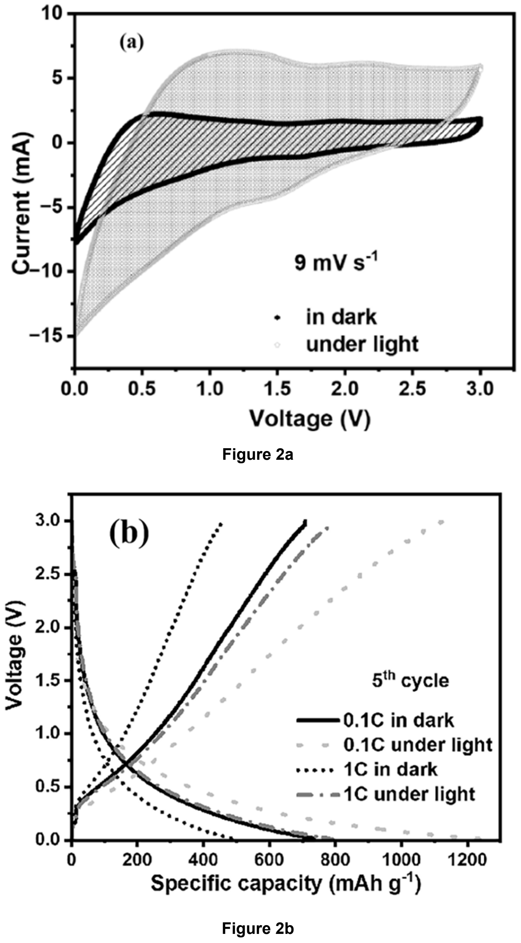

Cyclic voltammetry (CV) was performed within a voltage window of 0.01 - 3.0 V (versus Li/Li+) at a scan rate of 1 - 9 mVs⁻¹. As shown in Figure 2a, the CV curves of the free-standing WO3 anode measured at 9 mVs⁻¹ in the dark exhibited the expected anodic peaks at 0.62V, 1.27V, 2V, and 2.5V, with a cathodic peak observed at 1.68V. The presence of multiple peaks during the anodic sweep indicates efficient Li-ion transport and insertion.

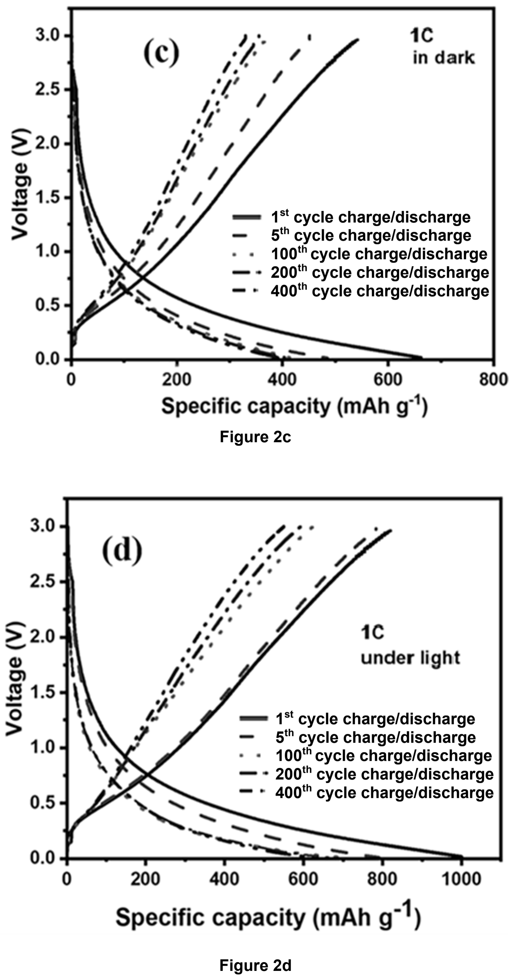

Figures 2b and 2c show the impact of capacity on charge/discharge rate when operated in the dark. At a 0.1C charge/discharge rate, a specific capacity of 708 mAhg⁻¹ is observed after 5 cycles. At a rate of 1C, a specific capacity of 392 mAhg⁻¹ after 400 cycle is observed. These high energy storage values are related to the high average pore size and ease of lithium-ion diffusion in the free-standing WO3 anode. The 0.1C energy density is approximating to the theoretical capacity of WO3 at 693 mAhg⁻¹ with a slow decay in capacity for each cycle of charge/discharge. For the 1C tests, a charge rate more typical of real-life examples, the capacity steadies at around ~400 mAhg⁻¹ after 400 charge/discharge cycles. This is another benefit of using a highly porous anode material that reduces diffusion lengths for metal ions.

### Electrochemical performance under light

As shown in Figure 2a, when under illumination at AM 1.5, subtle shifts in the position of the anodic and cathodic peaks were observed. Without being bound by theory, it is thought that the changes in peak location are a result of reduced redox potentials due to enhanced surface reactivity under light. CV performed under illumination showed a rise in current by more than a factor of 2. Again, without being bound by theory, this is thought to be due to the presence of additional photoinduced charge carriers. The symmetry and consistency (same shape and position) of these peaks, even with increased scan rate (9 mV s⁻¹), is indicative of an electrochemical system that demonstrates excellent reversibility, charge-discharge capacity, and overall stability.

Figure 2a shows a comparison of the CV curves of the free-standing WO3 electrodes measured in both dark and light conditions at a scan rate of 9 mVs⁻¹. The CV area, linked to specific capacity, is three times larger under light, indicating enhanced capacity to store charge with illumination. This is further confirmed by the constant current charge/discharge (GCD) test, as shown in Figures 2b and 2d.

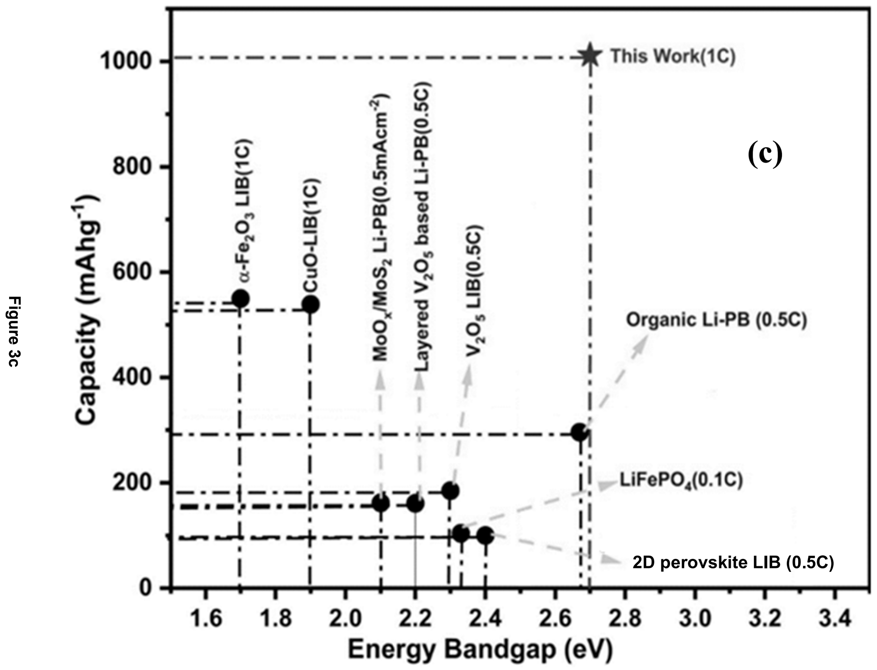

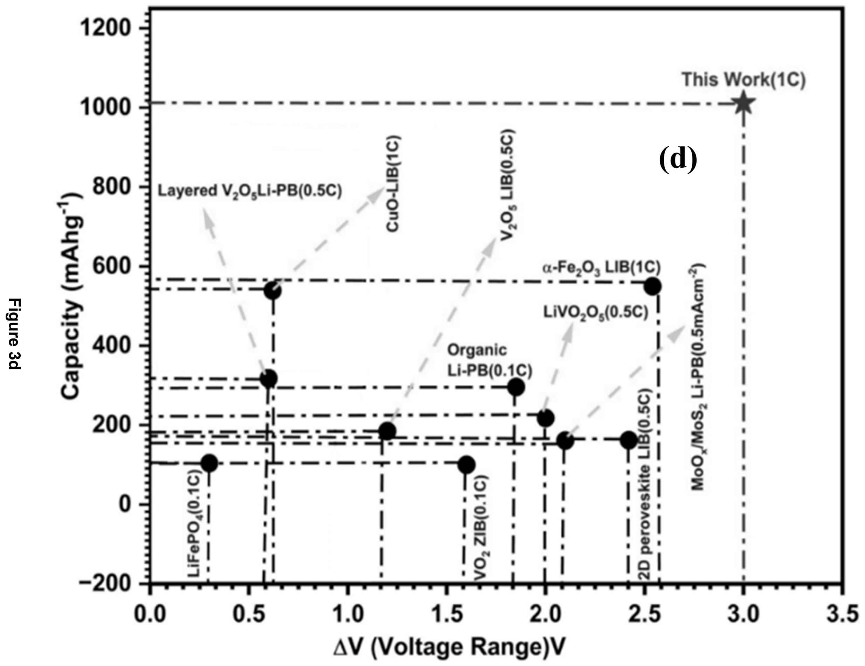

The capacities of the batteries at 1C under light were measured. As shown in Figure 2d, the capacity of WO₃ under illumination stabilises at 625 mAhg⁻¹ after 400 cycles. This compares to 400 mA g⁻¹ for the same system in dark conditions (Figure 2c). For the first 100 cycles, the capacity exceeds the theoretical limit of WO3. This is attributed to the presence of two energy sources, electrochemical and incident AM 1.5 light. Figures 3c and 3d (discussed below) show that these results demonstrate a high capacity while operating in wide voltage window range.

Typically, in the published literature, the capacity of WO3 is reported at a 0.1C charge/discharge rate. Under illumination, the free-standing WO3 anode shows a substantial capacity exceeding the theoretical limit. After 5 charge/discharge cycles, the energy density clusters around 1250 mAhg⁻¹, representing a twofold increase over the theoretical value. Without being bound by theory, it is thought that this is due to the increase in mobile carriers due to the interaction with light and ease of transport of mobile species in a highly porous photoactive system. Hence, the combination of a highly porous and photoactive material has enabled a significant advance in the energy storage capacity the system.

As shown in Figure 2b the GCD curves for the 5th cycles measured in both dark and illuminated conditions at 0.1C and 1C rates show an increase in capacity under light. In the dark, the discharge capacities were approximately 700 mAhg⁻¹ at 0.1C and 500 mAhg⁻¹ at 1C. Under illumination, these capacities increased to around 1150 mAhg⁻¹ at 0.1C and 800 mAhg⁻¹ at 1C.

The impact of illumination on the diffusion of Li-ions was investigated using a Randles-Sevcik plot. By plotting the peak current versus the square root of the scan rate, the apparent diffusion coefficient (D) for Li⁺ can be determined by fitting the data with the Randles-Sevcik equation (1): ${I}_{peak} = 2.69 \times {10}^{5} {n}^{1.5} A {CD}_{Li +}^{1 / 2} {v}^{1 / 2}$
where *Iₚₑₐₖ* is the peak current;
*n* is the charge transfer number;
*A* is the illuminated electrode surface area;
*D* is the diffusion coefficient,
*C* is the Li ion concentration; and
*C* is the Li ion concentration, and v is the potential scan rate.

A D value of 3.7 × 10⁻⁸*cm*²*s*⁻¹ at a voltage of 0.96V (peak1) was obtained for the free-standing WO3 anode measured under light. To understand the impact of illumination, the D value in the dark was also determined, which was found to be 7.9 × 10⁻¹⁰*cm*²*s*⁻¹. The ratio (light to dark) for the diffusion coefficients for the two further anodic peaks were found to be in the same range.

**Table 1: Diffusion coefficients for WO3-free standing electrode in dark and under light.**

| **Redox Peaks in dark** | **Diffusion coefficient, *D*_{*Li*+} (cm² s⁻¹)** | **Redox Peaks under light** | **Diffusion coefficient, *D*_{*Li*+} (cm² s⁻¹)** |
|---|---|---|---|
| P1 at 0.62 V | 7.91x10⁻¹⁰ | P1at 0.69 V | 3.67x10⁻⁸ |
| P2 at 2 V | 3.96 x10⁻¹⁰ | P2 at 2.1V | 4.14x10⁻⁸ |
| Pr3 at 1.68 V | 3.36x10⁻¹⁰ | Pr3 at1.5 V | 1.16x10⁻⁸ |

The higher Li⁺ diffusion coefficients under light suggest that the insertion and extraction of Li-ions are more efficient during the electrochemical process.

The efficiency of energy conversion (*η*) from light to specific capacity is an important parameter in assessing the performance of photo-assisted batteries: $η = {E}_{output} / {E}_{input}$ ${E}_{output} = \left(\int {Vdt}_{light}-\int {Vdt}_{dark}\right) \times CD \times m$ ${E}_{input} = P ∗ A ∗ t$
wherein *Eᵢₙₚᵤₜ* denotes the photoenergy input supplied by a Xenon lamp;
*Eₒᵤₜₚᵤₜ* is the output energy that results from photo-electric conversion;
*A* corresponds to the illumination area;
*P* represents the power density of illumination;
*t* is the duration of light during the charging operation;
*∫ Vdt_{light}* represents discharging area of cell under light;
*∫ Vdt_{dark}* represents discharging area of cell in dark;
*CD* is the current density; and
*m* is the mass of active materials.

A maximum energy conversion efficiency of 5.96% was observed with the photobattery operating across the voltage range of 0.1 to 3.0 V. This is a large increase in both the maximum conversion efficiency and operating window when compared to known systems, as shown in Table 2 provided below, wherein the inventive example is represented as No #1:

**Table 2: Comparison of photoconversion and storage efficiency (PC-SE) of two electrodes Li-photobattery systems**

| **No.** | **Photo electrode** | **Voltage range** | **Voltage gap** | **PCSE (excitation source)** |
|---|---|---|---|---|
| **#1** | **WO3 nanoplates (inventive example)** | **0.01 - 3.0 V** | **2.99 V** | **5.96 %** |
| | | | | (Solar simulator, 100 mW cm⁻²) |
| #2 | V₂O₅ | ≈2.82 - 2.0 V | 0.82 V | 0.22% |
| | | | | (Xe-Lamp, 100 mW cm⁻²) |
| #3 | LiFePO₄ | 0.7 - 1.0 V | 0.3 V | 0.06-0.08% |
| | | | | (solar simulator, ~100 mW cm⁻²) |
| #4 | (C₆H₉C₂H₄NH₃)₂PbI₄ | 1.4 - 3.0 V | 1.6 V | 0.034 % |
| | | | | (White light 100 mW cm⁻²) |
| #5 | Cs₃Bi₂I₉ | 0.8 - 2.3 V | 1.5 V | 0.43% |
| | | | | (100 mW cm⁻²) |
| #6 | TiS₂-TiO₂ | 1 - 3.1 V | 2.1 V | 0.23% |
| | | | | (1 sun, 100 mW cm⁻²) |
| #7 | MoS₂ nanorods | 1.95 - 0.1 V | 1.85 V | ≈0.05% |
| | | | | (Solar Simulator) |

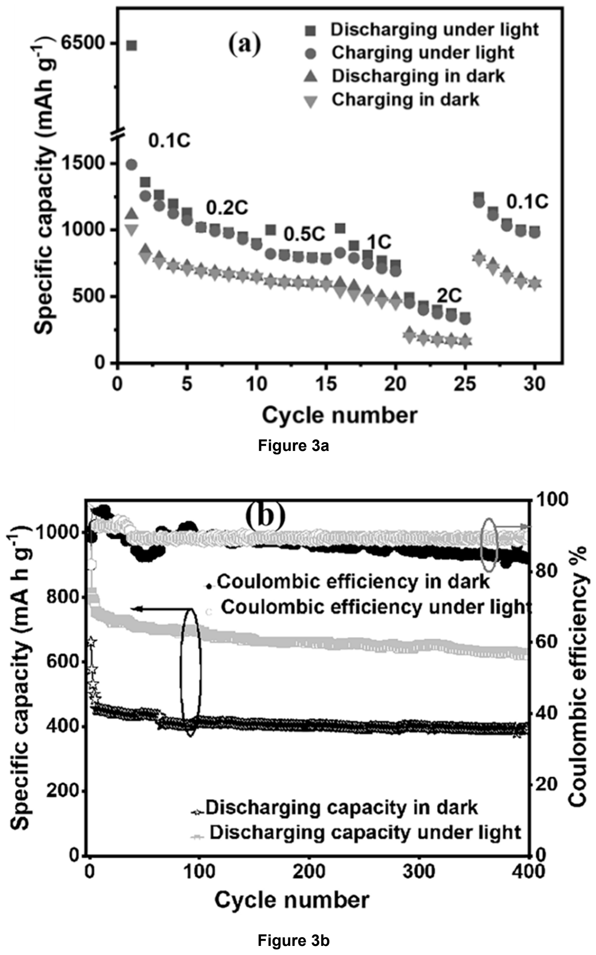

Most photo-batteries degrade quickly at high currents and have lower efficiencies over wide voltage ranges. The capability profiles for the free-standing WO3 anode were assessed at various rates from 0.1C to 2C to examine the impact of charge rate on capacity. Figure 3a shows the impact of charge rate on the discharge capacity of the photobattery. The initial high capacity is associated with driving the free-standing WO3 anode into equilibrium with the insertion of lithium during the redox cycles. The stability is developing after 5 cycles at the various charge rates. At 0.1C, the capacity after the 5th and 30th cycles are matched for both the dark and light system. This is attributed to WO3 and discrete conductive carbon component in the free-standing WO3 anode enhancing charge storage and overall performance.

The impact of capacity on cycling the photobattery by testing the WO3 system in the dark and under illumination was carried out under 1C charge-discharge GCD. Under illumination, a capacity of 623 mAhg⁻¹ was retained after 400 cycles, and a coulombic efficiency of around 90% whereas in the dark the capacity was 392 mAhg⁻¹ with a coulombic efficiency of 84%, as shown in Figure 3b. The performance at 2C and 1C along with stability up to 400 cycles and low-capacity fade are attributed to the porous WO3 structure and the employment of the discrete conductive carbon component. The carbon frame enhances conductivity and provides effective electron transport pathways, while also buffering volume changes and reducing WO3 aggregation. The WO3 nano-plates offer a large surface area, increasing activation sites for Li+ ion storage and contributing to the overall improved capacity with, and without, light. Hence, the combination of illumination and the nanostructured porous system result in a rapid charge transfer leading to a higher capacity, and better long-term cyclability.

### Photo-assisted charging and discharging mechanism

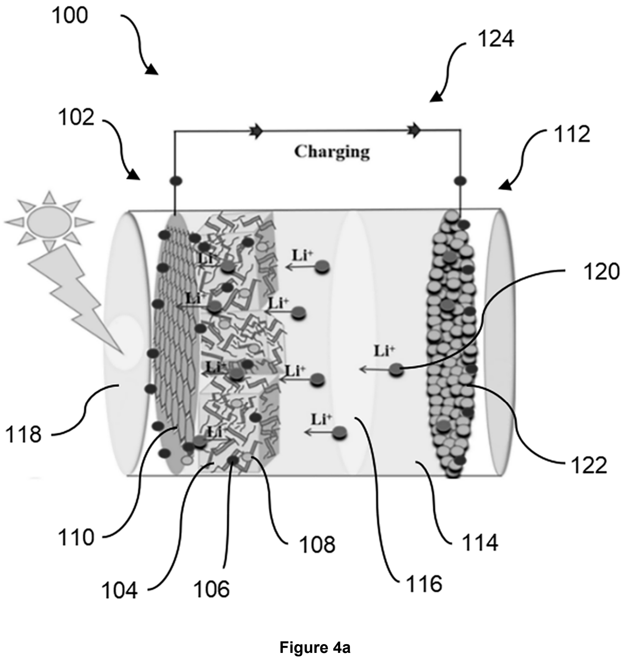

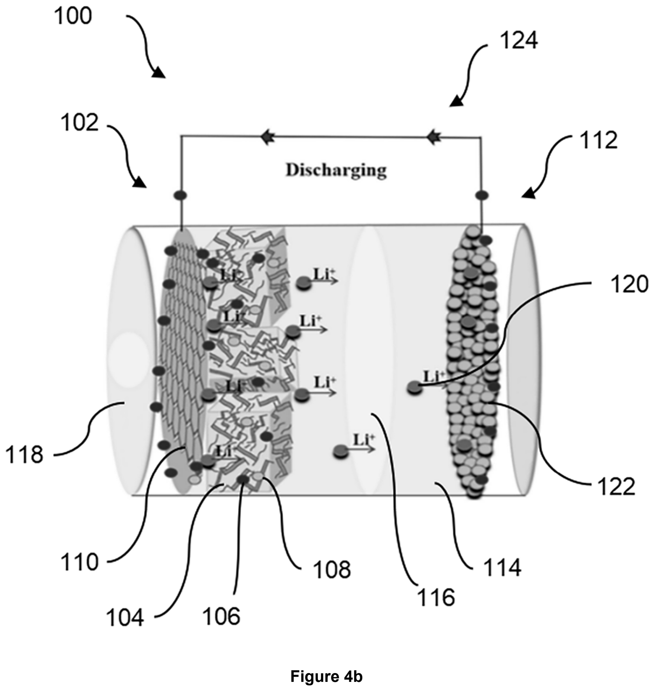

Figure 4a and 4b illustrate a schematic representation of a solar light-assisted Li⁺ ion storage photocharging (a) and discharging (b) mechanism for the free-standing WO3 anode.

Photobattery 100 comprises photoanode 102 and cathode 112 arranged at opposing ends of the battery. Photoanode 102 and cathode 112 are arranged in electrolyte 114 with separator 116 arranged therebetween. Photoanode 102 comprises transition metal oxide component 104 and discrete conductive carbon component 110. Transition metal oxide component 104 comprises WO3. Photoanode 102 is arranged adjacent to window 118. Cathode 112 comprises Li metal 122. Photoanode 102 and cathode 112 are electrically connected by circuitry 124.

The primary contributor to photocharging process is transition metal oxide component 104, which generates electrons 106 and holes 108 upon illumination of photoanode 102 through window 118. Photogenerated electrons 106 transfer from transition metal oxide component 104 to discrete conductive carbon component 110. This has been shown to enhance charge transfer in zinc-ion batteries by providing a superior interface for anode materials. Electrons 106 can follow one of two paths; they can either can recombine with holes 108 or proceed to the counter electrode 112 via circuitry 124 to reduce Li⁺ ions 120 to Li metal 122, resulting in charge balance.

Holes 108 remain in the valence band of transition metal oxide component 104. Valence band holes can regenerate the pristine transition metal oxide component by repelling intercalated Li⁺ ions back into electrolyte by de-lithiation. The expulsion of Li⁺ ions from transition metal oxide component 104 restores the peak photobattery voltage and allows the device to deliver power again.

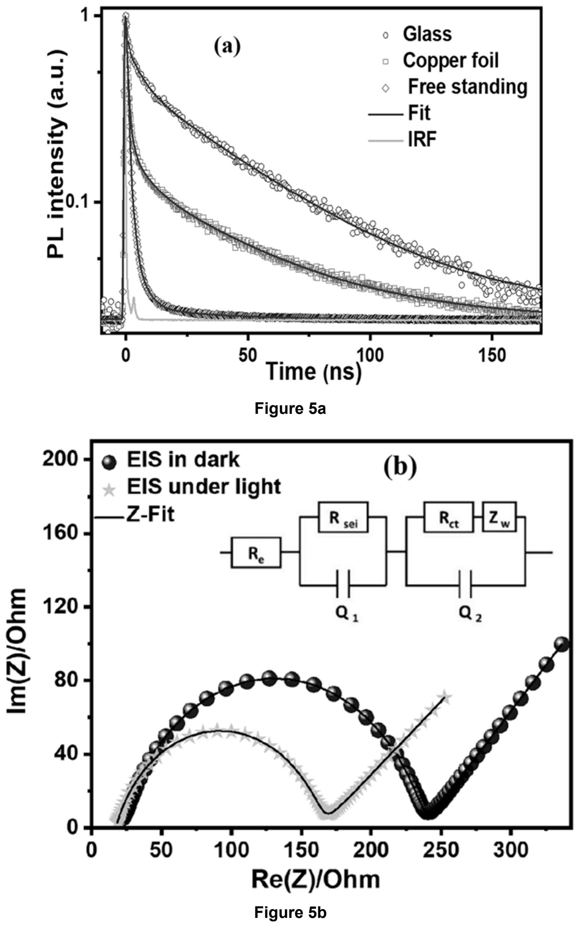

Hence, the free-standing WO3 anode serves two functions: lithium-ion storage and solar light harvesting. It is expected that the photoelectrons generated by light irradiation will influence the material's Li⁺ ion storage capacity. When the transition metal oxide component absorbs photons, its capacitance for Li⁺ storage is altered. Consequently, more photoelectrons participate in Li⁺ storage under light irradiation. The discrete conductive carbon component further improves conductivity and capacitance, forming a quasi-heterojunction with the transition metal oxide component which enhances electron transfer. This is demonstrated by the time-resolved photoluminescence spectroscopy carried out to study the lifetime of photogenerated charge carriers and the electron transfer mechanism, as shown in Figure 5a. The free-standing WO3 anode showed a much shorter lifetime (~4 ns) compared to a copper foil based anode (~32 ns) and pristine WO3 anode (~48 ns), indicating efficient electron transfer and charge extraction at the transition metal oxide component-discrete conductive carbon component interface.

Electrochemical impedance spectroscopy (EIS) was conducted to assess the interface kinetics and Li⁺ diffusion at the electrode/electrolyte interface, both under light and in dark. Nyquist plots, presented in Figure 5b, illustrate the impedance of a fresh electrode and after 5 charge-discharge (GCD) cycles at a 0.05C rate. The Nyquist plots feature distinct high and low-frequency regions, with a semicircle in the high-frequency range corresponding to charge transfer, and a sloping line in the low-frequency range indicating lithium-ion mass transfer.

The EIS data was modelled using an equivalent circuit. The initial x-axis intercept represents the total resistance (Rₑ) of the electrolyte, separator, and electrodes, while the semicircle in the medium frequency range signifies the charge-transfer resistance (R_{ct}), which reflects the kinetics of the electrochemical reaction. The electrode exposed to light exhibited the lowest internal resistance, demonstrating superior conductivity and charge transfer efficiency. The charge-transfer resistance (R_{ct}) was lower for the electrode under light (R_{ct} = 27 Ω fresh, 164 Ω after 5 cycles) compared to without light (R_{ct} = 32 Ω fresh, 218 Ω after 5 cycles). This reduction in R_{ct} under light suggests enhanced Li⁺ insertion/extraction kinetics.

At low frequencies, each inclined line in the spectrum represents Li⁺ diffusion in the respective electrode. After the semi-circle in the low-frequency region, a ~45° slope in the Nyquist plot indicates Warburg impedance, showing semi-infinite diffusion. In the ultra-low frequency region, the steeper slope signifies finite diffusion. As frequency decreases, the slope increases, marking the transition from semi-infinite to finite diffusion. The WO3 electrode under light shows the highest slope, indicating easier Li⁺ diffusion and better accessibility to both surface and bulk Li⁺.

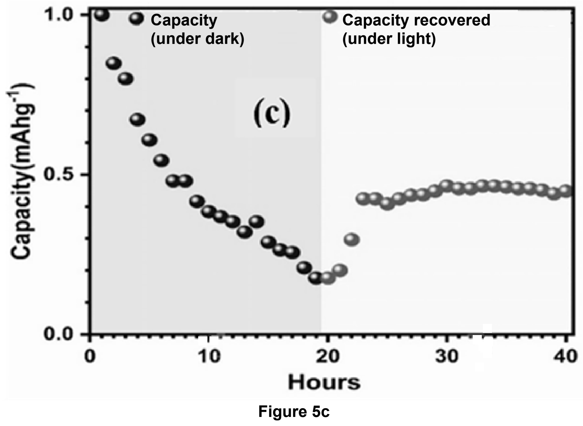

Regeneration test was conducted by reviving a nearly depleted battery (16% capacity) by recharging it with light, restoring its capacity to ~ 50% of the original value, which then stabilized. The results are shown in Figure 5c.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The disclosure is not restricted to the details of the foregoing embodiment(s). The disclosure extends to any novel one, or any novel combination, of the features disclosed in this specification (including any accompanying claims, abstract and drawings), or to any novel one, or any novel combination, of the steps of any method or process so disclosed.

## Claims

1. A photoelectrode for a rechargeable metal-ion photobattery, suitably a lithium-ion photobattery, comprising:
a. a transition metal oxide component; and
b. a discrete conductive carbon component,
wherein the transition metal oxide component comprises a single transition metal oxide material, the single transition metal oxide material having an average pore size of at least 5 nm, and
wherein the discrete conductive carbon component has a thickness of 50 µm or less.

2. A photoelectrode according to claim 1, wherein a carbon quasi-heterojunction is capable of being formed between the transition metal oxide component and the discrete conductive carbon component.

3. A photoelectrode according to claim 1 or 2, wherein the single transition metal oxide material comprises a single transition metal oxide, preferably WO3.

4. A photoelectrode according to any preceding claim, wherein the single transition metal oxide material comprises a hole scavenger.

5. A photoelectrode according to any preceding claim, wherein the transition metal oxide component has a surface area of at least 4 m²g⁻¹.

6. A photoelectrode according to any preceding claim, wherein the transition metal oxide component further comprises a carbon source, such as carbon black and/or a polymer, such as polyvinylidene fluoride.

7. A photoelectrode according to any preceding claim, wherein the discrete conductive carbon component is graphitic carbon.

8. A photoelectrode according to any preceding claim, wherein the photoelectrode is a photoanode.

9. A photoelectrode according to any preceding claim, wherein the photoanode is a bi-functional electrode capable of harvesting photons and providing electron storage.

10. A method of preparing a photoelectrode for a rechargeable metal-ion photobattery, suitably a lithium-ion photobattery, comprising:
a. preparing a slurry comprising a transition metal oxide and a hole scavenger;
b. coating the slurry onto a discrete conductive carbon component; and
c. drying the slurry.

11. Use of a photoelectrode according to any one of claims 1 to 9 in a metal-ion photobattery, suitably a lithium-ion photobattery.

12. A kit of parts comprising:
a. a first photoelectrode according to any one of claims 1 to 9;
b. a second electrode;
c. an electrolyte; and
d. a separator.

13. A rechargeable metal-ion photobattery, suitably a lithium-ion photobattery, comprising the photoelectrode according to any one of claims 1 to 9.

14. A rechargeable metal-ion photobattery according to claim 13, wherein the photobattery has an operating window voltage gap of at least 2 V; and/or wherein the photobattery has photoconversion and storage efficiency of at least 2%.

15. A rechargeable metal-ion photobattery according to claim 13 or 14, wherein the photobattery is a two-electrode photobattery.
